# EUROPÄISCHE PATENTSCHRIFT

(11) **EP 3 514 047 B1**
(45) Veröffentlichungstag und Bekanntmachung des Hinweises auf die Patenterteilung: **06.10.2021**
(21) Anmeldenummer: 19152523.7
(22) Anmeldetag: 18.01.2019
(51) Int. Cl.: B62K 27/00, B62L 3/00, B60T 7/08

(54) **DRAHTLOSE BREMSSTEUERUNG**
WIRELESS BRAKE CONTROL
COMMANDE DE FREINAGE SANS FIL

(30) Priorität: 19.01.2018 DE 202018100310 U
(43) Veröffentlichungstag der Anmeldung: 24.07.2019
(73) Patentinhaber: Croozer GmbH, 50825 Köln (DE)
(72) Erfinder: GEHLEN, Andreas, 50829 Köln (DE)
(74) Vertreter: Lenzing Gerber Stute

(56) Entgegenhaltungen:
- WO-A1-2017/144832
- DE-A1-102010 051 838

## Beschreibung

Die vorliegende Erfindung betrifft einen Anhänger für ein Leichtfahrzeug, insbesondere einen Fahrradanhänger, mit einem Bremssystem, das mindestens eine auf ein oder mehrere Räder des Anhängers wirkende Bremseinheit und eine Steuereinheit mit mindestens einem manuellen Betätigungsmittel zur Steuerung der Bremseinheit aufweist.

Unter einem Leichtfahrzeug wird ein mit Muskelkraft betreibbares Fahrzeug, insbesondere ein Fahrrad oder ein Tricycle, die auch elektromotorisch unterstützt sein können verstanden, aber auch ein Kleinkraftrad, wie etwa ein Moped, ein Mofa oder ein Roller.

Anhänger für Fahrräder erfreuen sich zunehmender Beliebtheit. So werden solche Anhänger zum Beispiel für den Transport von Kindern, Tieren oder Gütern angeboten.

Es gibt unterschiedliche Arten der Verbindung zwischen Anhängern und Leichtfahrzeugen. Heutige Fahrradanhänger zum Transport von Kindern werden üblicherweise mit einer einarmigen Deichsel seitlich an der Hinterradgabel mit einer Kupplung am Fahrrad befestigt. Solche Fahrradanhänger sind auch ohne eigenes Bremssystem bei den üblichen Fortbewegungsgeschwindigkeiten eines Fahrrads ausreichend sicher. Allerdings besteht bei schwereren ungebremsten Anhängern die Gefahr, dass diese seitlich ausbrechen oder sogar das gesamte Gespann zum Umkippen bringen, wenn das Fahrrad stark abgebremst wird. Außerdem kann es sein, dass bei zunehmendem Gewicht des gesamten Zuggespanns die durch die Bremsen des Fahrrads aufbringbare Bremskraft nicht für die Gesamtmasse des Gespanns ausreicht.

Aus dem Stand der Technik sind Anhänger für Leichtfahrzeuge bekannt, die über ein eigenes Bremssystem verfügen, so dass sich die gesamte Bremsleistung des Gespanns aus Leichtfahrzeug und Anhänger deutlich verbessert.

Aus der AT 504 023 A1 ist ein Fahrradanhänger mit einer Auflaufbremse bekannt. Dabei sind die Deichsel zwischen Anhänger und Fahrrad und das Chassis des Anhängers zueinander beweglich. Bewegt sich die Deichsel, z.B. in Folge eines Abbremsens des Fahrrads, relativ zum Chassis entgegen der Fahrtrichtung, so wird eine Bremse am Fahrradanhänger ausgelöst. Ähnliche Auflaufbremsen sind auch aus der DE 10 2008 029 990, der WO 2008/017941 oder von dem Fahrradanhänger "Carla Cargo" der gleichnamigen Firma bekannt. Nachteilig bei einer solchen Auflaufbremse ist jedoch, dass die Bremse auch unbeabsichtigt ausgelöst werden kann, beispielsweise wegen eines Schlaglochs oder bei einer Bergabfahrt.

Ebenfalls nachteilig ist, dass bei einem fahrradtypischen Fahren im Wiegetritt, wobei der Benutzer zur Erhöhung seines Tretmomentes im Stehen fährt, in Fahrtrichtung Wechsellasten entstehen, die in einem ungünstigen Fall im Moment des Lastwechsels einen Bremsimpuls auslösen können, was sowohl die Fahrsicherheit beeinträchtigt als auch kontraproduktiv für die angestrebte Erhöhung des Tretmomentes ist.

Aus der DE 10 2008 044 865 ist bekannt, zur Vermeidung eines ungewollten Auslösens einer Auflaufbremse ein Rastelement im zueinander beweglichen Bereich von Deichsel und Deichselaufnahme am Anhänger vorzusehen. Dieses Rastelement ist lediglich quer zur Richtung der Relativbewegung zwischen Deichsel und Deichselaufnahme beweglich und sperrt die Relativbewegung bis zu einem gewissen Schwellenwert, bei dem es aus der Rastposition herausgedrückt wird.

Aus der DE 10 2010 051 838 und der DE 10 2014 009 746 sind Anhänger bekannt, die sowohl die Relativbewegung von Leichtfahrzeug und Anhänger in Fahrtrichtung als auch gegen die Fahrtrichtung messen, beispielsweise mit einem Kraftsensor in der Deichsel. Durch Datenverarbeitung kann dann eine aufzubringende Bremskraft und, in Verbindung mit einem Antriebselement am Anhänger, auch eine Antriebskraft zur Unterstützung des Benutzers errechnet werden. Auch hierbei kann ein Schwellenwert eingestellt sein, ab dem die Brems- bzw. Beschleunigungskraft aufgebracht wird.

Nachteilig bei allen diesen bekannten Auflaufbremsen ist jedoch, dass die Steuerung des Bremsvorgangs sehr aufwendig und/oder ungenau ist.

Darüber hinaus ist aus der DE 195 24 416 ein Anhänger mit einem Antrieb zur Erhöhung der Antriebsleistung eines Landfahrzeugs bekannt. Das Landfahrzeug kann auch ein Fahrrad oder ein anderes muskelbetriebenes Fahrzeug sein. Der Anhänger ist vorzugsweise auch mit einer Bremse ausgestattet. Dies kann insbesondere eine Auflaufbremse sein. Als denkbar werden auch Bremsanlagen angegeben, die vom Basisfahrzeug aus zu betreiben sind, wobei in diesem Zusammenhang sowohl unmittelbare mechanische Betätigungsvorrichtungen als denkbar angesehen werden als auch Bremsanlagen, die über Zwischenmedien, z.B. hydraulisch, pneumatisch oder elektrisch, arbeiten. Die Bremsanlage kann über eine Steuerung betrieben werden, die auch den Antriebsmotor regelt. Zur elektrischen Steuerung des Antriebs des Anhängers vom Fahrzeug aus wird eine Steckkupplung vorgeschlagen, wie sie für herkömmliche elektrische Bordeinrichtungen bei bekannten Anhängern verwendet wird. Diese Lösung ist vergleichsweise aufwändig in der Handhabung.

Weiterhin offenbart das Dokument WO2017/144832A1 einen Fahrradanhänger mit allen Merkmalen des Oberbegriffs des unabhängigen Anspruchs 1.

Insbesondere mit Blick auf die zunehmende Verbreitung von leicht motorisierten Leichtfahrzeugen, insbesondere von elektrisch angetriebenen Fahrrädern, mit denen auch schwerere Anhänger gezogen werden können und/oder höhere Geschwindigkeiten erreicht werden als mit nicht elektrisch angetriebenen Fahrrädern, besteht eine Aufgabe der vorliegenden Erfindung darin, einen Anhänger für Leichtfahrzeuge bereitzustellen mit einem Bremssystem , das dem Benutzer eine bessere Kontrolle über das Gespann ermöglicht und einfach in der Handhabung ist. Gelöst wird diese Aufgabe durch einen Anhänger mit den Merkmalen des Anspruchs 1.

Vorteilhafte Weiterentwicklung ergeben sich aus den Unteransprüchen.

Indem die Steuereinheit einen Sender und die Bremseinheit einen Empfänger zur drahtlosen Übertragung von elektromagnetischen Signalen zur Steuerung der Bremseinheit aufweist, ist es möglich, über die manuellen Betätigungsmittel Informationen über die gewünschte Bremskraft vorzugeben und an die Bremseinheit zu übermitteln, ohne dafür ein mechanisches Übertragungsmittel beim Kupplungsvorgang verbinden zu müssen. Der Fahrer oder die Fahrerin des Leichtfahrzeugs kann entscheiden, ob und wie stark die Bremseinheit am Anhänger ausgelöst werden soll. Außerdem ist die mechanische Bremskraft von der manuellen Betätigung entkoppelt. So ist es möglich, bei einer manuell vorgegebenen Vollbremsung die Bremskraft elektronisch so zu regeln, dass ein Wegrutschen der gebremsten Räder vermieden wird, oder die mit einer manuellen Vorgabe verknüpfte Bremskraft an das Gewicht des Anhängers anzupassen.

Die Steuereinheit kann beispielsweise in einem kleinen, kompakten Gehäuse am Lenker oder Oberrohr des Fahrrads montiert werden, so dass sie für den Benutzer bequem zugänglich ist und er die Steuereinheit während der Fahrt mit der Hand auslösen kann. Die aufwändige Montage von mechanischen oder elektrischen Verbindungsmitteln wie etwa Bouwdenzügen oder Kabeln am Leichtfahrzeug entfällt. Weiterhin kann die Steuereinheit an mehreren Leichtfahrzeugen verwendet werden. So ist beispielsweise ein Clipsystem denkbar, welches die Steuereinheit mit wenigen Handgriffen montierbar war bzw. demontierbar macht.

Vorteilhaft können die elektromagnetischen Signale Funksignale sein. Diese lassen sich einfach und auf kleinem Bauraum in der Steuereinheit erzeugen und sicher übertragen. Funksignale sind nur wenig störanfällig. Auch technisch machbar sind zum Beispiel Lichtsignale oder Tonsignale.

Die am Anhänger vorgesehene Bremseinheit ist anspruchsgemäß eine mechanische Bremse, insbesondere eine Scheibenbremse, eine Backenbremse, eine Klotzbremse oder eine Trommelbremse sein sowie einen mechanischen Aktuator zum Betätigen der Bremse aufweisen, wobei die Bremseinheit so eingerichtet ist, dass der Aktuator durch das empfangene Signal gesteuert wird. Diese Bremsenarten werden bereits bei vielen Leichtfahrzeugen, insbesondere bei Fahrrädern, verwendet und sind daher als Standardbauteil recht günstig. Als Aktuator kommt beispielsweise ein Elektromotor infrage, der zum Beispiel über einen mechanischen Zug oder eine hydraulische Leitung mit der Bremse verbunden sein kann. Auch ein solcher Motor ist in entsprechender Größe ein Standardbauteil und damit preiswert. Als Aktuator kommt auch eine Federanordnung infrage, die beispielsweise während der Fahrt durch Abgreifen von Bewegungsenergie vorgespannt wird und die Energie bis zum Auslösen speichert. Auch kommt als Bremse mindestens eine elektrische Bremse, insbesondere eine mit mindestens einem Laufrad des Anhängers kuppelbare elektromotorische Bremse oder Wirbelstrombremse, infrage, aber nicht beansprucht.

Dies ist insbesondere vorteilhaft, wenn der Anhänger über einen eigenen elektromotorischen Antrieb verfügt, der dann, als Generator betrieben, auch als Bremse wirken kann. Eine elektrische Bremse Ist nur sehr geringem Verschleiß unterworfen. Die Bremseinheit kann außerdem eine Bremssteuerungseinheit zur Steuerung der Bremsleistung der elektrischen Bremse in Abhängigkeit vom empfangenen Signal aufweisen. Eine solche Steuerung hat üblicherweise lediglich sehr geringen Platzbedarf sowie ein geringes Gewicht.

Das manuelle Betätigungsmittel der Steuereinheit kann beispielsweise ein Hebel, ein Schalter, ein Drücker oder ein Pedal sein. Wie bereits ausgeführt, kann sich die Steuereinheit in einem kleinen, im Bereich eines Lenkers anbringbaren Gehäuses befinden, an dem ebenfallsein solches Betätigungsmittel angeordnet sein kann. Diese Betätigungsmittel sind einfach aufgebaut und als Standardbauteil günstig.

Besonders vorteilhaft kann die Steuereinheit mindestens einen Sensor zur Messung mindestens einer manuell bewirkten Eingangsgröße, insbesondere mindestens einen Kraftsensor, einen Drucksensor, einen Abstandssensor und/oder einen Wegsensor aufweisen. Ein solcher Sensor kann mit einem Betätigungsmittel einer anderen Bremse, beispielsweise dem Bremsgriff an einem Fahrrad, zusammenwirken. Auf diese Weise wird die Bremseinheit gleichzeitig ausgelöst, wenn der Benutzer des Leichtfahrzeugs die andere Bremse betätigt. Vorteilhaft dabei ist, dass der Benutzer sich in seinem Bedienverhalten nicht auf das zusätzliche Bremssystem einstellen muss. Bei einer Fahrradbremse mit Bremsgriff kommt auch ein Abstandssensor in Frage, der den Abstand zwischen dem Lenkergriff und dem Bremshebel misst und ein Signal in Abhängigkeit des Abstandes erzeugt. Vorteilhaft ließe sich ein solcher Abstandssensor weitestgehend unabhängig von der genauen Bauform des Bremsgriffs und des Lenkers gestalten.

Ein solcher Sensor kann aber auch selbst als manuelles Betätigungsmittel ausgebildet sein und beispielsweise ebenfalls, wie die oben genannten Betätigungsmittel, an einem Gehäuse einer Steuereinheit verbaut sein.

Vorteilhaft kann die Steuereinheit Mittel zur Signalverarbeitung aufweisen, wobei die vom Sender auf den Empfänger übertragenen Signale mindestens eine Information über die beim Bremsen zu bewirkende Bremskraft enthält. Die Mittel zur Signalverarbeitung können kompakt und platzsparend in dem Gehäuse der Steuereinheit verbaut sein. Weiterhin können diese ein Signal erzeugen, welches komplexer ist als ein binäres Signal, so dass Informationen über eine feine Dosierung der Bremskraft in dem Signal enthalten sein können. Damit wird dem Benutzer eine hohe Kontrolle über das Gespann ermöglicht. Auch können anspruchsvollere Benutzer das Bremsverhalten bzw. die erzeugte Bremskraft genau auf ihre Bedürfnisse anpassen.

Vorzugsweise kann die Steuereinheit Mittel zur Eingabe von Fahrzeugdaten aufweisen, insbesondere zur Eingabe von Gewichtsdaten des Leichtfahrzeugs und/oder des Anhängers, wobei die mindestens eine Information über die beim Bremsen zu bewirkende Bremskraft in Abhängigkeit der Fahrzeugdaten berechnet werden kann. Der Anhänger ist dann für eine Vielzahl von Leichtfahrzeugen einsetzbar und kann durch den Benutzer auf einfache Weise an das jeweilige Leichtfahrzeug angepasst werden. Auch die Verwendung unterschiedlich langer Deichseln kann durch Eingabe der Abmessungen bei der Berechnung der Bremskraft Beachtung finden. Zudem kann das Bremsverhalten bei Benutzung des Anhängers im leeren und auch im beladenen Zustand jeweils kurzfristig angepasst werden.

Um dem Benutzer ein noch besseres Gefühl für das Bremssystem des Anhängers zu geben, kann auch die Bremseinheit einen Sender und die Steuereinheit einen Empfänger zur Übertragung von Signalen im Zusammenhang mit der tatsächlich durch die Bremseinheit aufgebracht Bremskraft aufweisen. Dabei können in der Steuereinheit und in der Bremseinheit jeweils Transponder verbaut sein. Die Steuereinheit könnte so zum Beispiel registrieren, wenn die Bremskraft einen einzustellenden Maximalwert erreicht, und das Betätigungsmittel entsprechend sperren. Auch könnte die Steuereinheit dem Benutzer ein Signal geben, wenn die Bremse überhitzt. Dies ist insbesondere bei Scheibenbremsen und/oder bei längeren Bergabfahrten von Interesse.

Vorzugsweise kann das mindestens eine manuelle Betätigungsmittel Mittel aufweisen, um eine sensorische Rückmeldung in Abhängigkeit des vom Empfänger der Steuereinheit empfangenen Signals zu erzeugen. So könnte beispielsweise, wie bei einer mechanisch mit einem Bremsgriff verbundenen Bremse, die zur Betätigung des manuellen Betätigungsmittels aufzubringende Kraft mit steigender Bremskraft ebenfalls ansteigen. Bei einem hochauflösenden Signal kann es auch möglich sein, eine sehr genaue Rückkopplung über die Bremskraft zu vermitteln, wie es bei einem mechanisch mit einer Bremse verbundenen Bremsgriff an einem Fahrrad der Fall ist. So würde der Bremsgriff beispielsweise bei einer Bremsung auf Schotter eine entsprechende Vibration vermitteln.

Da sowohl zur Signalerzeugung bzw. Datenverarbeitung in der Steuereinheit als auch zum Betreiben eines Aktuators, insbesondere eines elektromotorischen Aktuators, Energie benötigt wird, können die Steuereinheit und/oder die Bremseinheit jeweils mindestens einen Energiespeicher aufweisen. Dies kann beispielsweise ein Akkumulator oder eine Batterie sein.

Der mindestens eine Energiespeicher kann, insbesondere mittels mindestens einer Solarzelle, eines über ein Rad mitlaufenden Generators (Dynamo) oder über eine Rekuperation von Bremsenergie wiederaufladbar sein. Insbesondere bei der Nutzung einer Solarzelle, des Generators oder der Rekuperation von Bremsenergie muss der Benutzer insbesondere nicht daran denken, die Energiespeicher regelmäßig aufzuladen, oder Sorge haben, dass während eines Ausflugs das Bremssystem mit leeren Energiespeichern ausfällt.

Vorteilhaft können der Sender in der Steuereinheit und/oder der Empfänger in der Bremseinheit ein Datenübertragungsprotokoll nutzen, bei dem sich Sender und Empfänger gegenseitig identifizieren und die Signale verschlüsselt übertragen werden. Dies kann insbesondere in dichtem Verkehr von Vorteil sein, da dort gegebenenfalls andere Sender und/oder Empfänger in der Nähe sein könnten die Signale gleicher oder annähernd gleicher Frequenz nutzen. Eine störende Interaktion mit solchen anderen Sendern und/oder Empfängern wird durch eine Verschlüsselung effektiv verhindert. Im Folgenden wird die Erfindung anhand von Figuren, die bevorzugte Ausführungsbeispiele zeigen, näher erläutert.

Es zeigen:
Fig. 1: eine Prinzipskizze eines Fahrrads mit einer Ausführungsform eines erfindungsgemäßen Anhängers mit Bremssystem
Fig. 2: eine Aufsicht eines Chassis einer Ausführungsform eines erfindungsgemäßen Fahrradanhängers mit Bremssystem
Fig. 3: eine Aufsicht eines Chassis einer Ausführungsform eines erfindungsgemäßen Fahrradanhängers mit Bremssystem
Fig. 4: eine Aufsicht eines Chassis einer Ausführungsform eines erfindungsgemäßen Fahrradanhängers mit Bremssystem

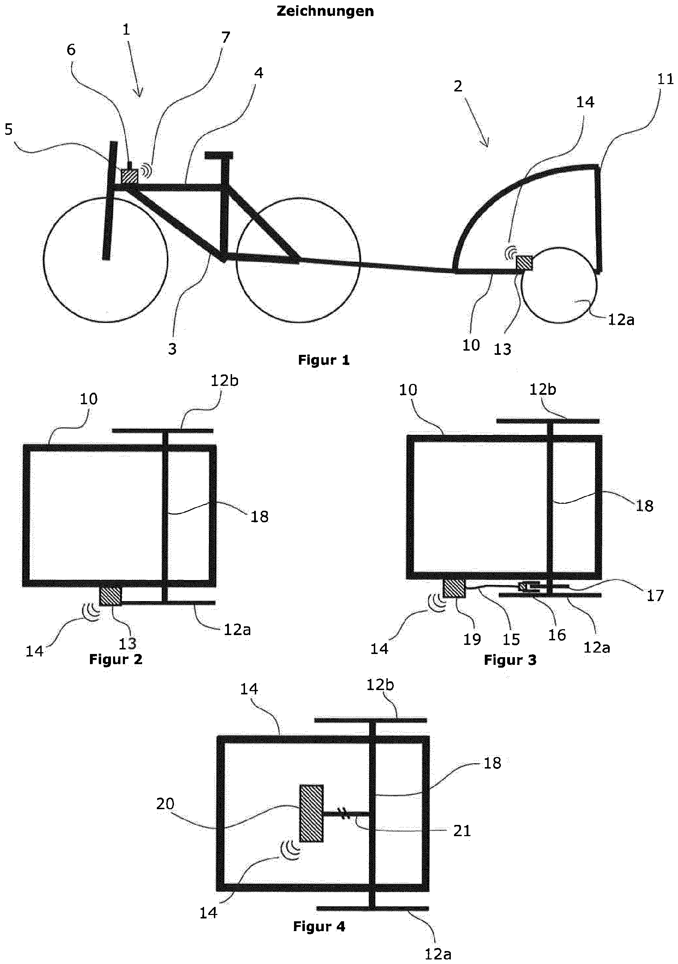

Figur 1 zeigt ein Fahrrad 1 mit einem erfindungsgemäßen Anhänger 2. Das Fahrrad weist einen Rahmen 3 mit einem Oberrohr 4 auf. In der gezeigten Ausführungsform ist eine Steuereinheit 5 eines Bremssystems an dem Oberrohr 4 des Fahrrads 1 angebracht. Die Steuereinheit 5 weist ein Betätigungsmittel 6 auf, welches durch den Benutzer auf einfache Weise betätigt werden kann. Weiterhin umfasst die Steuereinheit 5 einen nicht gezeigten Sender, der elektromagnetische Signale 7 erzeugen kann, welche Informationen über die beim Bremsen zu bewirkende Bremskraft übermitteln.

Der Anhänger 2 weist ein Chassis 10, eine Fahrgastzelle 11 sowie zwei Laufräder 12a und 12b auf. In der in Figur 1 gezeigten Ausführungsform ist die Bremseinheit 13 am Chassis 10 in direkter Nähe zum Laufrad 11a angeordnet und umfasst unter anderem die nicht gezeigten Teile Empfänger, Aktuator und Bremse, wobei die Bremse auf das Laufrad 11a wirkt. Weiterhin umfasst die Bremseinheit einen Sender und einen Empfänger, die elektromagnetische Signale 14 erzeugen bzw. elektromagnetische Signale, insbesondere die elektromagnetischen Signale 7, empfangen können.

Die Figuren 2 ― 4 zeigen Aufsichten von verschiedene Ausführungsformen des Chassis 10 des erfindungsgemäßen Anhängers. Die in Figur 2 gezeigte Ausführungsform entspricht der in Figur 1 gezeigten.

Figur 3 zeigt eine Ausführungsform, bei der die Bremseinheit 13 aus der nahe dem Laufrad 11a angeordneten Bremse 16 und einem davon beabstandeten am Chassis angeordneten Teil 19 besteht, welches z.B. Sender und Empfänger beinhalten kann.

Das Teil 19 ist mit einem Kabel 15 mit der Bremse 16 verbunden. Die Bremse 16 ist eine Scheibenbremse mit einer Bremsscheibe 17, die auf einer Laufradachse 18 angeordnet ist. Die Bremseinheit 13 umfasst wiederum einen nicht gezeigten Sender und einen Empfänger, die das elektromagnetische Signal 14 erzeugen bzw. elektromagnetische Signale, insbesondere die elektromagnetischen Signale 7, empfangen können.

Figur 4 zeigt eine Ausführungsform, bei der die Laufradachse 18 durch einen in einer Motoreinheit 20 verbauten Motor, wie etwa einem Elektromotor, über eine Antriebswelle 21 angetrieben wird. Die Motoreinheit 20 stellt gleichzeitig die Bremseinheit dar. Empfängt die Motoreinheit 20, welche einen erfindungsgemäßen Empfänger enthält, das Signal 7, so treibt der Motor die Laufräder 12a, 12b nicht mehr an, sondern wirkt als Bremse auf diese. Auch ist in der Motoreinheit 20 wiederum ein Sender vorgesehen, der das elektromagnetische Signal 14 erzeugen kann.

## Patentansprüche

1. Anhänger (2) für ein Leichtfahrzeug, insbesondere Fahrradanhänger, mit einem Bremssystem, das mindestens eine auf ein oder mehrere Räder des Anhängers wirkende Bremseinheit 13) und eine Steuereinheit (5) mit mindestens einem manuellen Betätigungsmittel (6) zur Steuerung der Bremseinheit (13) aufweist, wobei die Steuereinheit (5) einen Sender und die Bremseinheit (13) einen Empfänger zur drahtlosen Übertragung von elektromagnetischen Signalen zur Steuerung der Bremseinheit (13) aufweist, **dadurch gekennzeichnet, dass** die Bremseinheit (13) eine mechanische Bremse (16), insbesondere eine Scheibenbremse, eine Backenbremse, eine Klotzbremse oder eine Trommelbremse, sowie einen mechanischen Aktuator zum Betätigen der Bremse (16) aufweist, wobei die Bremseinheit (13) so eingerichtet ist, dass der Aktuator durch das empfangene Signal (7) gesteuert wird.

2. Anhänger nach Anspruch 1, **dadurch gekennzeichnet, dass** die Signale Funksignale sind.

3. Anhänger nach Anspruch 1 oder 2, **dadurch gekennzeichnet, dass** der Aktuator ein Elektromotor ist.

4. Anhänger nach einem der vorstehenden Ansprüche, **dadurch gekennzeichnet, dass** das mindestens eine manuelle Betätigungsmittel ein Hebel, ein Schalter, ein Drücker, ein Drehgriff oder ein Pedal ist.

5. Anhänger nach einem der vorstehenden Ansprüche, **dadurch gekennzeichnet, dass** das mindestens eine manuelle Betätigungsmittel ein Bedienelement des Leichtfahrzeugs, insbesondere ein Bremsgriff oder ein Pedal des Leichtfahrzeugs, ist.

6. Anhänger nach einem der vorhergehenden Ansprüche, **dadurch gekennzeichnet, dass** die Steuereinheit mindestens einen Sensor zur Messung mindestens einer manuell bewirkten Eingangsgröße, insbesondere mindestens einen Kraftsensor, einen Drucksensor, einen Abstandssensor und/oder einen Wegsensor aufweist, wobei der mindestens eine Sensor vorzugsweise als manuelles Betätigungsmittel dient.

7. Anhänger nach einem der vorhergehenden Ansprüche, **dadurch gekennzeichnet, dass** die Steuereinheit Mittel zur Signalverarbeitung aufweist und das vom Sender auf den Empfänger übertragene Signal mindestens eine Information über die beim Bremsen zu bewirkende Bremskraft enthält.

8. Anhänger nach Anspruch 7, **dadurch gekennzeichnet, dass** die Steuereinheit Mittel zur Eingabe von Fahrzeugdaten aufweist, insbesondere zur Eingabe von Gewichtsdaten des Leichtfahrzeugs und/oder des Anhängers, und die mindestens eine Information über die beim Bremsen zu bewirkende Bremskraft in Abhängigkeit der Fahrzeugdaten berechnet wird.

9. Anhänger nach einem der vorstehenden Ansprüche, **dadurch gekennzeichnet, dass** die Bremseinheit einen Sender und die Steuereinheit einen Empfänger zur Übertragung von Signalen im Zusammenhang mit der tatsächlich durch die Bremseinheit aufgebrachten Bremskraft aufweist.

10. Anhänger nach Anspruch 9, **dadurch gekennzeichnet, dass** das mindestens eine manuelle Betätigungsmittel Mittel aufweist, um eine sensorische Rückmeldung in Abhängigkeit des vom Empfänger der Steuereinheit empfangenen Signals zu erzeugen.

11. Anhänger nach einem der vorhergehenden Ansprüche, **dadurch gekennzeichnet, dass** die Steuereinheit und/oder die Bremseinheit jeweils mindestens einen Energiespeicher aufweisen.

12. Anhänger nach Anspruch 11, **dadurch gekennzeichnet, dass** der mindestens eine Energiespeicher, insbesondere mittels mindestens einer Solarzelle, eines mit einem Rad mitlaufenden Generators oder über Rekuperation von Bremsenergie, wiederaufladbar ist.

13. Anhänger nach einem der vorhergehenden Ansprüche, **dadurch gekennzeichnet, dass** der Sender in der Steuereinheit und/oder der Empfänger in der Bremseinheit ein Datenübertragungsprotokoll nutzen, bei dem sich Sender und Empfänger gegenseitig identifizieren und die Signale verschlüsselt übertragen werden.

14. Anhänger nach einem der vorhergehenden Ansprüche, **gekennzeichnet durch** eine elektronische Regelung, mit der ein Wegrutschen der gebremsten Räder vermieden wird, wobei die mechanische Bremskraft von der manuellen Betätigung entkoppelt ist.

## Claims

1. Trailer (2) for a lightweight vehicle, in particular bicycle trailer, with a braking system comprising at least one brake unit (13) acting on one or more wheels of the trailer and a control unit (5) with at least one manual actuating means (6) for controlling the brake unit (13), wherein the control unit (5) comprises a transmitter and the brake unit (13) comprises a receiver for wireless transmission of electromagnetic signals for controlling the brake unit (13), **characterized in that** the brake unit (13) has a mechanical brake (16), in particular a disc brake, a shoe brake, a block brake or a drum brake, and a mechanical actuator for actuating the brake (16), the brake unit (13) being set up such that the actuator is controlled by the received signal (7).

2. Trailer according to claim 1, **characterized in that** the signals are radio signals.

3. Trailer according to claim 1 or 2, **characterized in that** the actuator is an electric motor.

4. Trailer according to one of the preceding claims, **characterized in that** the at least one manual actuating means is a lever, a switch, a pusher, a rotary handle or a pedal.

5. Trailer according to one of the preceding claims, **characterized in that** the at least one manual actuating means is a control element of the lightweight vehicle, in particular a brake handle or a pedal of the lightweight vehicle.

6. Trailer according to one of the preceding claims, **characterized in that** the control unit comprises at least one sensor for measuring at least one manually effected input variable, in particular at least one force sensor, one pressure sensor, one distance sensor and/or one displacement sensor, wherein the at least one sensor preferably serves as manual actuation means.

7. Trailer according to one of the preceding claims, **characterized in that** the control unit has means for signal processing and the signal transmitted from the transmitter to the receiver contains at least one item of information about the braking force to be applied during braking.

8. Trailer according to claim 7, **characterized in that** the control unit comprises means for inputting vehicle data, in particular for inputting weight data of the lightweight vehicle and/or of the trailer, and the at least one information about the braking force to be applied during braking is calculated as a function of the vehicle data.

9. Trailer according to one of the preceding claims, **characterized in that** the brake unit comprises a transmitter and the control unit comprises a receiver for transmitting signals related to the braking force actually applied by the brake unit.

10. Trailer according to claim 9, **characterized in that** said at least one manual actuation means comprises means for generating a sensory feedback in response to the signal received from the receiver of the control unit.

11. Trailer according to one of the preceding claims, **characterized in that** the control unit and/or the brake unit each have at least one energy storage device.

12. Trailer according to claim 11, **characterized in that** the at least one energy storage device is rechargeable, in particular by means of at least one solar cell, a generator running with a wheel or via recuperation of braking energy.

13. Trailer according to one of the preceding claims, **characterized in that** the transmitter in the control unit and/or the receiver in the brake unit use a data transmission protocol in which the transmitter and receiver identify each other and the signals are transmitted in encrypted form.

14. Trailer according to one of the preceding claims, **characterized by** an electronic control system for preventing slippage of the braked wheels, wherein the mechanical braking force is decoupled from the manual actuation.

## Revendications

1. Remorque (2) pour un véhicule léger, en particulier remorque de bicyclette, avec un système de freinage, qui présente au moins une unité de freinage (13) agissant sur une ou plusieurs roues de la remorque et une unité de commande (5) avec au moins un moyen d'actionnement manuel (6) pour la commande de l'unité de freinage (13), dans laquelle l'unité de commande (5) présente un émetteur et l'unité de freinage (13) un récepteur pour la transmission sans fil de signaux électromagnétiques pour la commande de l'unité de freinage (13), **caractérisée en ce que** l'unité de freinage (13) présente un frein mécanique (16), en particulier un frein à disque, un frein à mâchoire, un frein à sabot ou un frein à tambour, ainsi qu'un actionneur mécanique pour l'actionnement du frein (16), dans laquelle l'unité de freinage (13) est conçue de sorte que l'actionneur est commandé par le signal (7) reçu.

2. Remorque selon la revendication 1, **caractérisée en ce que** les signaux sont des signaux radio.

3. Remorque selon la revendication 1 ou 2, **caractérisée en ce que** l'actionneur est un moteur électrique.

4. Remorque selon l'une quelconque des revendications précédentes, **caractérisée en ce que** l'au moins un moyen d'actionnement manuel est un levier, un commutateur, un bouton, une poignée tournante ou une pédale.

5. Remorque selon l'une quelconque des revendications précédentes, **caractérisée en ce que** l'au moins un moyen d'actionnement manuel est un élément de commande utilisateur du véhicule léger, en particulier une poignée de frein ou une pédale du véhicule léger.

6. Remorque selon l'une quelconque des revendications précédentes, **caractérisée en ce que** l'unité de commande présente au moins un capteur pour la mesure d'au moins une grandeur d'entrée produite manuellement, en particulier au moins un capteur de force, un capteur de pression, un capteur de distance et/ou un capteur de course, dans laquelle le l'au moins un capteur sert de préférence de moyen d'actionnement manuel.

7. Remorque selon l'une quelconque des revendications précédentes, **caractérisée en ce que** l'unité de commande présente des moyens pour le traitement de signaux et le signal transmis par l'émetteur au récepteur contient au moins une information concernant la force de freinage à produire lors du freinage.

8. Remorque selon la revendication 7, **caractérisée en ce que** l'unité de commande présente des moyens pour l'entrée de données de véhicule, en particulier pour l'entrée de données de poids du véhicule léger et/ou de la remorque, et l'au moins une information concernant la force de freinage à produire lors du freinage est calculée en fonction des données de véhicule.

9. Remorque selon l'une quelconque des revendications précédentes, **caractérisée en ce que** l'unité de freinage présente un émetteur et l'unité de commande un récepteur pour la transmission de signaux en relation avec la force de freinage effectivement appliquée par l'unité de freinage.

10. Remorque selon la revendication 9, **caractérisée en ce que** l'au moins un moyen d'actionnement manuel présente des moyens pour générer un retour sensoriel en fonction du signal reçu par le récepteur de l'unité de commande.

11. Remorque selon l'une quelconque des revendications précédentes, **caractérisée en ce que** l'unité de commande et/ou l'unité de freinage présentent respectivement au moins un accumulateur d'énergie.

12. Remorque selon la revendication 11, **caractérisée en ce que** l'au moins un accumulateur d'énergie peut être rechargé, en particulier au moyen d'au moins une cellule solaire, d'un générateur tournant avec une roue ou par récupération d'énergie de freinage.

13. Remorque selon l'une quelconque des revendications précédentes, **caractérisée en ce que** l'émetteur dans l'unité de commande et/ou le récepteur dans l'unité de freinage utilisent un protocole de transmission de données, pour lequel l'émetteur et le récepteur s'identifient mutuellement et les signaux sont transmis de manière chiffrée.

14. Remorque selon l'une quelconque des revendications précédentes, **caractérisée par** une régulation électronique, avec laquelle un dérapage des roues freinées est évité, dans laquelle la force de freinage mécanique est découplée de l'actionnement manuel.
